(19) Europäisches Patentamt

European Patent Office

Office européen des brevets

(11) Veröffentlichungsnummer: **0 203 284**
**A2**

(12) **EUROPÄISCHE PATENTANMELDUNG**

(21) Anmeldenummer: 86103241.5

(22) Anmeldetag: 11.03.86

(51) Int. Cl.⁴: **B01J 32/00** , F01N 3/08 , B01D 53/36

(30) Priorität: 06.04.85 DE 3512586

(43) Veröffentlichungstag der Anmeldung:
03.12.86 Patentblatt 86/49

(84) Benannte Vertragsstaaten:
AT BE CH DE FR GB IT LI LU NL SE

(71) Anmelder: **DYNAMIT NOBEL AKTIENGESELLSCHAFT**
**Postfach 1261**
**D-5210 Troisdorf, Bez. Köln(DE)**

(72) Erfinder: **Engels, Hans-Werner**
**Am Bergeracker 1**
**D-5210 Trosdorf(DE)**
Erfinder: **Neuschäffer, Karl-Heinz, Dr.**
**Böttnerstrasse 6**
**D-5653 Leichlingen(DE)**
Erfinder: **Spielau, Paul, Dr.**
**Van-Gogh-Platz 10**
**D-5210 Troisdorf-Eschmar(DE)**

(54) **Abgaskatalysator-Träger aus anorganischen Formmassen.**

(57) Es wird vorgeschlagen, einen Abgaskatalysator-Träger neuer Art dadurch herzustellen, daß eine anorganische Formmasse, welche bei 60 bis 120° C aktiv härtet, hergestellt wird, welche aus einer Alkalisilikatlösung und einer festen mit der Alkalisilikatlösung reaktionsfähigen Komponente besteht, welche ein Oxid-Gemisch mit Gehalten von amorphem $SiO_2$ und Aluminiumoxid und/oder Elektrofilterasche aus Hochtemperatur-Steinkohle-Kraftwerken und/oder kalziniertem gemahlenem Bauxit und/oder Metakaolin bestehen kann, wobei die enthaltenen Hohlkanäle des Abgaskatalysator-Trägers durch Reaktion von Aluminiumstäben oder -drähten in der Alkalisilikatlösung unter gleichzeitiger Abscheidung von Aluminiumoxidhydrat gebildet werden. In einem Erhitzungsvorgang wird aus dem Aluminiumoxidhydrat γ-Aluminiumoxid gebildet, das zur Verankerung und Fixierung des Katalysatormetalls dient.

## Abgaskatalysator-Träger aus anorganischen Formmassen

Abgaskatalysator-Träger für Abgaskatalysatoren in beispielsweise Kraftfahrzeugen oder zur Gasreinigung von Industrieanlagen bzw. Kraftwerken mit darin enthaltenen Hohlkanälen, in denen die Katalysator-Materialien aufgebracht sind, bestehen im allgemeinen aus keramischen Formkörpern, welche bei den für keramische Materialien erforderlichen hohen Temperaturen gebrannt und dadurch gehärtet sind, worauf in den enthaltenen Kanälen ein Trägermaterial aus $\gamma$-Aluminiumoxid aufgebracht werden muß, auf dem der Katalysator aus bevorzugt feinteiligen Katalysatormetallen verankert werden kann.

Durch die Art des keramischen Herstellverfahrens sowie durch die erforderlichen Hohlkanäle bestimmten Durchmessers und das darin aufgebrachte $\gamma$-Aluminiumoxid ist die Herstellung solcher Katalysator-Träger für die Rei nigung von Abgasen aufwendig.

Gemäß der Erfindung wird vorgeschlagen, den Formkörper des Abgaskatalysator-Trägers aus einer bei niedrigen Temperaturen von höchstens 120° C härtenden anorganischen Formmasse herzustellen, welche aus einer festen anorganischen Reaktionskomponente und einer flüssigen Alkalisilikatlösung besteht, wobei auf vereinfachte Weise die erforderlichen Hohlkanäle entstehen und die Auskleidung der Hohlkanäle mit $\gamma$-Aluminiumoxid auf neuartige Weise hergestellt wird, welche durch Verwendung der alkalischen Alkalisilikatlösung als Bestandteil der fließfähigen Formmasse möglich wird. In einem Erhitzungsprozess werden die sich bildenden Aluminiumoxidhydrate in $\gamma$-Aluminiumoxid als fest haftende Bekleidung der Hohlkanäle umgewandelt, auf der die Katalysator-Metalle fest verankert werden können.

Gegenstand der Erfindung sind daher Abgaskatalysator-Träger aus einem anorganischen Formkörper mit enthaltenen Hohlkanälen mit Auskleidungen aus $\gamma$-Aluminiumoxid, bestehend aus einem aus einer fließfähigen Formmasse durch Härtung bei 60 bis 120° C entstandenen Formkörper, entstanden durch Reaktion von

a) einem Oxid-Gemisch mit Gehalten von amorphem $SiO_2$ und Aluminiumoxid und/oder

b) Elektrofilterasche aus Hochtemperatur-Steinkohle Kraftwerken und/oder

c) kalziniertem gemahlenem Bauxit und/oder Metakaolin in Mengen von 0,5 bis 4,0 Gew.-Teilen der feinteiligen Komponenten a) bis

c) je Gew.-Teil einer Alkalisilikatlösung mit Gehalten von 1,2 bis 2,5 Mol gelöstem $SiO_2$ je Mol $K_2O$ bzw. $Na_2O$ sowie ggf. feinteiligen Füllstoffen, worin die Kanäle des Formkörpers durch Einstellen oder Einhängen von Aluminiumdrähten bzw. -stäben noch flüssige Formmasse und Reaktion des Aluminiums mit den Alkalien der Alkalisilikatlösung eine Ablagerung von Aluminiumoxid gebildet haben, wonach die Ablagerung durch Erhitzen auf Temperaturen bis 850° C in $\gamma$-Aluminiumoxid an der Oberfläche der Hohlkanäle umgewandelt wurde.

Weiterer Gegenstand der Erfindung ist ein Verfahren zur Herstellung dieser Abgaskatalysator-Träger, welches dadurch gekennzeichnet ist, daß Abgaskatalysator-Träger aus anorganischen Formmassen mit enthaltenen Hohlkanälen mit einer Ablagerung von $\gamma$-Aluminiumoxid an deren Oberfläche eine anorganische Formmasse aus

a) einem Oxid-Gemisch mit Gehalten von amorphem $SiO_2$ und Aluminiumoxid und/oder

b) Elektrofilterasche aus Hochtemperatur-Steinkohle-Kraftwerken und/oder

c) kalziniertem gemahlenem Bauxit und/oder Metakaolin in Mengen von 0,5 bis 4,0 Gew.-Teilen der feinteiligen Komponenten a) bis c) je Gew.-Teil einer Alkalisilikatlösung mit Gehalten von 1,2 bis 2,5 Mol gelöstem $SiO_2$ je Mol $K_2O$ bzw. $Na_2O$ sowie ggf. feinteiligen Füllstoffen in fließfähiger Form in eine Form gegossen, gepreßt bzw. extrudiert wird, wobei die Form eine Vielzahl von parallel angeordneten Aluminiumdrähten bzw. -stäben enthält und die Formmasse bei Temperaturen von 60 bis 120°C gehärtet wird, wobei durch Reaktion der Alkalien der Alkalisilikatlösung anstelle der Aluminiumdrähte bzw. -stäbe Hohlkanäle mit einer Auskleidung aus Aluminiumoxidhydrat entstehen, worauf durch Erhitzen auf 600 bis 850°C das Aluminiumoxidhydrat an der Oberfläche der Hohlkanäle in $\gamma$-Aluminiumoxid umgewandelt wird.

Gemäß der Erfindung werden die Formkörper der Abgaskatalysator-Träger demgemäß aus einer fließfähigen anorganischen Formmasse hergestellt, welche bei niedrigen Temperaturen von 60 bis 120°C, vorzugsweise bei Temperaturen von 60 bis 98°C in der Lage ist, steinbildend zu erhärten.

Mit der alkalischen Alkalisilikatlösung sind nur ausgewählte, besonders geartete anorganische feinteilige Festkörper in der Lage, steinbildend zu erhärten, wobei nur wenige Materialien die Voraussetzung erfüllen, einerseits in der Alkalisilikatlösung unlöslich zu sein und andererseits ohne Zufuhr äußerer Wärme oder ggf. bei Zufuhr von Wärme bei niedrigen Temperaturen von höchstens 120° C zu Festkörpern zu erstarren, welche dimensionsstabil sind, einen nachträglichen Erhitzungsprozess aushalten und eine hohe Bruchfestigkeit und Biegefestigkeit von mindestens 10 N/mm² sowie eine hohe Druckfestigkeit und eine hohe Härte nach der Mohs-Skala aufweisen.

Solche steinbildenden, festen, reaktiven Bestandteile der Formmasse sind die Materialien der Gruppe a), b) und c) und deren Mischungen der Patentansprüche 1 und 2. Überraschend ist es einerseits möglich, aus alkalisch reagierenden fließfähigen Formmassen Abgaskatalysator-Träger herzustellen, ohne daß die alkalischen Bestandteile die Wirksamkeit der Katalysatoren beeinträchtigen. Andererseits ist es überraschend, daß eine wesentlich vereinfachte Herstellung der Hohlräume für den Durchtritt der Abgase möglich ist und gleichzeitig eine wesentlich vereinfachte Auskleidung dieser Hohlräume mit $\gamma$-Al$_2$O$_3$ zur Verankerung der Katalysatoren ausführbar ist. Metakaolin als fester reaktionsfähiger Bestandteil der Formmasse wird aus natürlichem Kaolin durch Erhitzung bei hohen Temperaturen gewonnen und ist aus der europäischen Patentschrift 0026 687 als Bestandteil von Formkörpern bekannt, welche zur Herstellung von Kunstgegenständen dienen können.

Das Oxid-Gemisch mit Gehalten von amorphem SiO$_2$ und Aluminiumoxid ist wasserfrei und entsteht bei Hochtemperaturprozessen als feinverteilter Staub durch Abkühlung aus der Dampf-bzw. Gasphase bei der Herstellung industrieller Schmelzprodukte, wie insbesondere von Korund oder Mullit aus Bauxit, wobei das Oxid-Gemisch bei wechselnder Zusammensetzung nicht dem jeweiligen Schmelzprodukt entspricht. In dem Oxid-Gemisch können, abhängig von der Art des Schmelzprozesses und dem Fortschritt des Schmelzvorgangs, wechselnde Gehalte der Bestandteile von 7 bis 75 Gew.-% SiO$_2$ und 12 bis 87 % Al$_2$O$_3$ neben weiteren Bestandteilen enthalten sein, die beispielsweise Eisenoxide oder geringe Anteile von Fluoriden, P$_2$O$_5$ oder ZrO$_2$ sein können. Das SiO$_2$ liegt in röntgen-amorpher Form vor, während Al$_2$O$_3$ zumindest zum Teil kristallin ist, wobei $\alpha$-Al$_2$O$_3$ - (Korund) und besonders das alkalihaltige $\beta$-Al$_2$O$_3$ festgestellt wurde. Im Röntgenogramm ergeben kleine Anteile von gut kristallinen Nebenbestandteilen in Mengen von 0,1 bis 0,5 Gew.-% scharfe Röntgenreflexe von z.B. Quarz, TiO$_2$ oder Al$_2$O$_3$-Modifikation, während die Hauptmenge der Bestandteile nicht deutbare, sehr breite und schwache Erhebung von geringer Kristallinität über dem Untergrund ergeben. In dem Oxid-Gemisch besteht 75 bis 95 Gew.-%, zumeist 85 bis 95, analytisch aus Al$_2$O$_3$ plus SiO$_2$. Dieses Oxid-Gemisch, auch ROS genannt, ist die bevorzugte reaktive Komponente.

Elektrofilterasche entsteht als staubförmige Abscheidung in den Elektrofiltern von Hochtemperatur-Steinkohle-Kraftwerken mit Brennkammertemperaturn von 1.600 bis 1.700° C. Nur diese bei den genannten Temperaturen entstehende Elektrofilterasche ist als reaktionsfähige Komponente in den Formmassen brauchbar, während Abscheidungen von Kraftwerken bei geringerer Kammertemperatur nicht brauchbar sind. Elektrofilterasche ist glasartig-amorph und enthält 45 bis 55 Gew.-% SiO$_2$-Glas, 25 bis 35 Gew.-% Al$_2$O$_3$ neben geringeren Anteilen Fe$_2$O$_3$. Die Analyse der meisten Proben liegt bei 48 bis 52 Gew.-% SiO$_2$, 25 bis 30 Gew.-% Al$_2$O$_3$ neben 8 bis 11 Gew.-% Fe$_2$O$_3$. Die Korngröße liegt zu 65 % unter 10 µm, zu 80 % unter 50 µm und zu 90% unter 60 µm.

Kalzinierter Bauxit entsteht aus gemahlenem oder gebrochenem Bauxit durch einen Kalzinierungsprozess bei hohen Temperaturen und ist als Rohstoff der Aluminiumindustrie verfügbar.

Als Alkalisilikatlösung kommen sogenannte Wasserglaslösungen mit den genannten Molverhältnissen in Frage, wobei solche mit K$_2$O gegenüber solchen mit Na$_2$O bevorzugt sind und bevorzugt Alkali im Überschuß vorhanden sein soll.

Vorzugsweise sollen 1,2 bis 2,0Mol SiO$_2$ je Mol K$_2$O bzw. Na$_2$O enthalten sein. Die Alkalisilikatlösungen haben im allgemeinen einen Wassergehalt von 28 bis 45 Gew.-%, der bei Natron-Wasserglaslösungen auch bis zu 60 Gew.-% betragen kann, wobei jedoch wasserärmere Lösungen bevorzugt sind.

Bevorzugt wird eine solche Alkalisilikatlösung durch Auflösen von amorpher, dispers-pulverförmiger, wasserhaltiger Kieselsäure, der sogenannten gefällten Kieselsäure, in Alkalihydroxiden oder deren wässrigen Lösungen hergestellt.

Die Formmassen weisen Wassergehalte von 20 bis 65 Gew.-%, bezogen auf die aktiven steinbildenden Bestandteile, ohne Berücksichtigung der Füllstoffe, auf, wobei Wassergehalte von 26 bis 58 Gew.-% bevorzugt sind.

Als Füllstoffe werden solche bevorzugt, welche eine erhöhte Temperaturbeständigkeit aufweisen und sich bei dem Erhitzen zur Herstellung des $\gamma$-Al$_2$O$_3$ nicht in störender Weise verändern.

Solche Füllstoffe sind z.B. Talkum, SiO₂, Quarz, Aluminiumoxide und MgO. Geeignete Füllstoffe sind jedoch auch die genannten reaktiven Bestandteile der Formmasse, welche über die genannten Mengen hinausgehen und daher nicht aktiv in Reaktion treten.

Zur Einbringung der Hohlkanäle in den Katalysator-Träger, welche entsprechend der maximalen Abgasmenge in entsprechender Zahl und einem geeigneten Durchmesser vorzusehen sind, wird ein neuer Weg beschritten.

Bisher mußten bei Verwendung keramischer Katalysator-Träger durch entsprechende Ausgestaltung der Formen das Freibleiben der Kanäle bei der Formung des Trägers erreicht werden, was besonders bei einer großen Anzahl Kanälen und geringem Durchmesser schwierig und aufwendig ist. In diese Kanäle war weiterhin in einem gesonderten Arbeitsgang Aluminiumhydrat bzw.-oxidhydrat einzubringen, welches nach Umwandlung in $\gamma$-Al₂O₃ zur Verankerung der Katalysatormetalle erforderlich ist.

Gemäß der Erfindung wird ein einfacher Weg beschritten, wonach bereits bei Guß der Formmassen Aluminiumstäbe bzw. -drähte dort angeordnet sind und mit den Alkalien der Formmasse unter Bildung von Wasserstoff und Aluminiumoxidhydrat reagieren und derart die Hohlräume bilden. Es ist von Vorteil, daß vergrößerte Kanäle, verglichen mit dem Durchmesser der Drähte, mit großer innerer Oberfläche entstehen. Die Anordnung der Hohlkanäle, und damit der Al-Drähte, ist je nach Typ der Katalysator-Träger verschiedenartig; häufig ist eine parallele Anordnung der Hohlkanäle sowie eine radiale Anordnung, ausgehend von einem zentralen Einlaß größeren Durchmessers.

Dieser Vorgang kann durch Anlegen einer elektrischen Gleichspannung gefördert werden. Hierzu ist es zweckmäßig, zur Haltung der Stäbe bzw. Drähte einen Teil der Formwandung, beispielsweise bei zylindrischer Bauart des Katalysators, die Kopfflächen des Zylinders mit z.B. Lochscheiben auszustatten, in denen die Al-Stäbe gehalten sind. Die Kopfenden der Stäbe können dann auf einfache Weise bei Bedarf mit einer Stromquelle verbunden werden. Erfindungsgemäß können die Stäbe bzw. Drähte vollständig in das Oxidhydrat umgewandelt werden, oder die übriggebliebenen Kerne der Stäbe können entfernt werden. Der entstehende Wasserstoff wird durch Absaugen entfernt.

Erfindungsgemäß ist folglich ein enges Ineinandergreifen der Besonderheiten der alkalischen Formmasse und deren Härtung bei nur geringen Temperaturen zu festen entformbaren Körpern und der Reaktion des Alkaligehaltes der Formmasse mit dem Aluminium der Stäbe zur Bildung der Hohlkanäle vorgesehen, wodurch die Herstellung von Abgaskatalysator-Trägern wesentlich vereinfacht und erheblich wirtschaftlicher gestaltet wird.

Die bei der Härtung erforderlichen Temperaturen entstehen teils durch die Reaktionswärme bei der Reaktion der festen Reaktionspartner mit der Alkalisilikatlösung, können jedoch durch Außenheizung oder durch elektrische Widerstandsheizung bzw. durch die Reaktionswärme der Umsetzung von Aluminium mit Alkalien erzeugt werden.

Die Härtungszeit der Formmassen zu Formkörpern ist gering und beträgt im allgemeinen 20 bis 60, bevorzugt 20 bis 40 Minuten.

Zur Herstellung des $\gamma$-Aluminiumoxids ist ein Erhitzungsvorgang auf an sich bekannte Temperaturen erforderlich, welche durch die Bildungstemperatur dieser Aluminiumoxid-modifikation vorgegeben sind und bei höchstens 850 bis 880° C und allgemein im Bereich von 600 bis 850° C liegen.

Es entsteht ein besonderer Vorteil durch die feste Ein lagerung des $\gamma$-Aluminiumoxids durch Entstehung des entsprechenden Oxidhydrats während der Härtungsreaktion.

Während der Härtung bleibt zunächst der Wassergehalt der Formmasse im wesentlichen erhalten. Zweckmäßig kann dieser Wassergehalt durch Lagerung der hergestellten Formkörper an der Luft auf einfache Weise entfernt werden, jedoch ist auch eine Entfernung durch Erwärmen auf Temperaturen über 120° C oder beim Erhitzen während der Bildung des $\gamma$-Aluminiumoxids möglich.

Das Erwärmen auf 600 bis 850° C dient ausschließlich zur Bildung des $\gamma$-Al₂O₃, nicht jedoch zur Härtung der Formkörper, welche bereits nach der Härtung bei Temperaturen von höchstens 120° C die erforderliche Festigkeit in Größenordnung der Festigkeit von keramischen Materialien haben, wobei aber diese Festigkeit bei keramischen Materialien erst durch den Brennvorgang entsteht, während die vorliegenden Formmassen erfindungsgemäß die reaktiven festen Komponenten a) bis c) aufweisen, welche durch steinbildende chemische Reaktionen mit der Alkalisilikatlösung die erforderliche Festigkeit entstehen lassen.

In der Zeichnung sind Abgaskatalysator-Träger gemäß der Erfindung dargestellt.

Es zeigen:

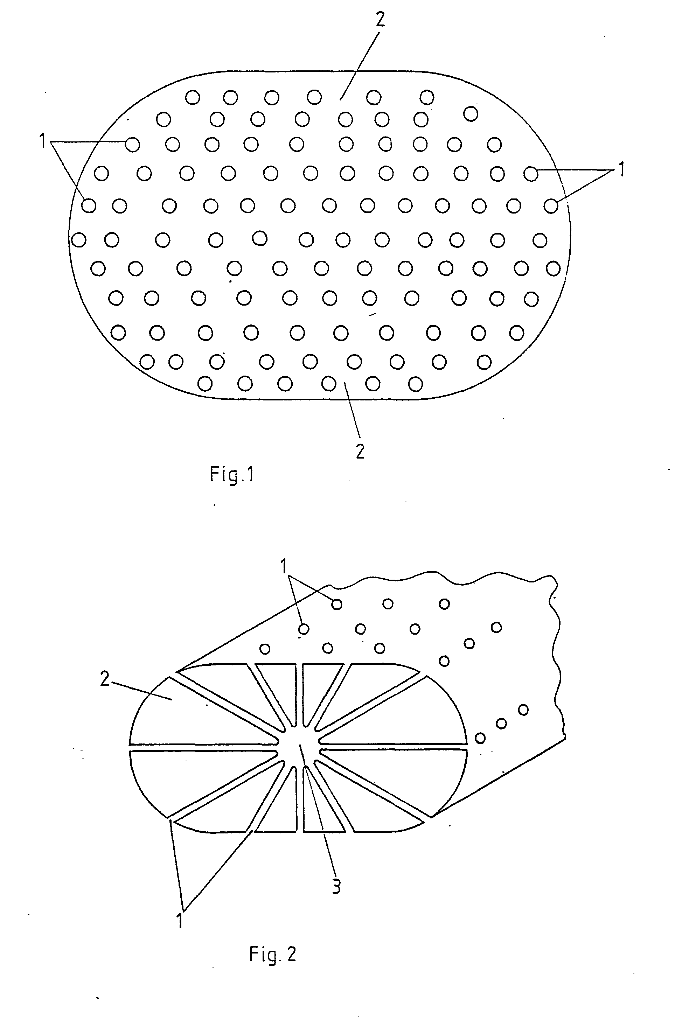

Figur 1 einen Querschnitt eines Katalysator-Trägers für Fahrzeuge mit der typischen flach-zylindrischen Form mit den kreisförmigen Querschnitten der im wesentlichen parallelen Hohlräume 1 in der gehärteten Formmasse 2 und

Figur 2 in perspektivischer Darstellung einen Katalysator-Träger mit an den Zylinderwandungen austretenden Hohlkanälen 1, die von einem zentralen Einlaß 3 ausgehen, eingebettet in gehärtete Formmasse 2.

Beispiel 1

Eine fließfähige Formmasse wird durch intensives Vermischen von 100 g einer kalialkalischen Kieselsäurelösung mit einem Molverhältnis von 1,5 $SiO_2$ zu 1 $K_2O$, hergestellt aus gefällter amorpher dispers-pulverförmiger Kieselsäure mit 50 Gew.-% Gehalt an $SiO_2$, durch Auflösen in 50 Gew.-%iger KOH, 100 g von Oxid-Gemisch mit Gehalten von amorphem $SiO_2$ und Aluminiumoxid, welches als Ofenfilterstaub bei der Schmelzverarbeitung von Bauxit erhalten wurde und 100 g kalziniertem gemahlenem Bauxit mit einer Korngröße unter 0,2 mm hergestellt und in ein Begrenzungsgefäß gefüllt, welches parallel zueinander angeordnete Aluminiumdrähte von 0,2 mm Durchmesser im Abstand von 0,6 cm voneinander senkrecht stehend enthält. Die Härtung erfolgt bei 85° C und ist in 60 min. beendet. Während der Härtung wird die Oberfläche der Drähte durch Alkali unter Bildung von gasförmigem Wasserstoff · und örtlicher Wärmeentwicklung zersetzt. Bei dem Entformen werden die Reste der Drähte entfernt. Es ist ein Formkörper mit einer Vielzahl von Kanälen entstanden. Die Kanäle sind durch die Gasbildung stark vergrößert und mit einer Schicht von Aluminiumoxidhydrat überzogen. In einen auf 700° C geheizten Ofen werden mehrere Katalysator-Träger eingelegt, worauf der Ofen auf 750° C aufgeheizt wird, wodurch das Aluminiumoxidhydrat $\gamma$-$Al_2O_3$ bildet. Der fertige Katalysator-Träger kann nach bekannten Verfahren mit Edelmetallverbindungen versehen werden, welche auf dem entstandenen $\gamma$-$Al_2O_3$ fixiert werden.

Beispiel 2

Ein Katalysator-Träger, wie in Beispiel 1, wird hergestellt, jedoch wird auf die Lochscheibe, welche die Aluminiumdrähte in der Begrenzungsform hält, ein Paßstück aufgesetzt, das an den Durchtrittsstellen der Aluminiumstäbe jeweils einen elektrischen Kontakt aufweist, an dem ein elektrischer Strom anliegt.

Bei der Entformung brauchen Reste der Aluminiumdrähte nicht entfernt zu werden. Die Hohlkanäle sind stärker vergrößert als in dem nach Beispiel 1 erhaltenen Formkörper.

Beispiel 3

Beispiel 1 wird wiederholt, wobei jedoch eine kalialkalische Kieselsäurelösung mit einem Molverhältnis von 1,2 $SiO_2$ zu 1 $K_2O$ in gleicher Menge verwendet wird.

Beispiel 4

Beispiel 1 wird wiederholt, wobei jedoch anstelle von 100 g kalziniertem Bauxit 100 g Talkum als Füllstoff verwendet wird.

Beispiel 5

Beispiel 1 wird wiederholt, wobei jedoch eine natronalkalische Kieselsäurelösung mit einem Molverhältnis von 1,3 $SiO_2$ zu 1 $Na_2O$ verwendet wurde, welche entsprechend durch Auflösen der gefällten Kieselsäure in 50 Gew.-%iger NaOH hergestellt worden war.

**Ansprüche**

1. Abgaskatalysator-Träger aus einem anorganischen Formkörper mit enthaltenen Hohlkanälen mit Auskleidungen aus $\gamma$-Aluminiumoxid, bestehend aus einem aus einer fließfähigen Formmasse durch Härtung bei 60 bis 120°C entstandenen Formkörper, entstanden durch Reaktion von

a) einem Oxid-Gemisch mit Gehalten von amorphem $SiO_2$ und Aluminiumoxid und/oder

b) Elektrofilterasche aus Hochtemperatur-Steinkohle-Kraftwerken und/oder

c) kalziniertem gemahlenem Bauxit und/oder Metakaolin in Mengen von 0,5 bis 4,0 Gew.-Teilen der feinteiligen Komponenten a) bis c) je Gew.-Teil einer Alkalisilikatlösung mit Gehalten von 1,2 bis 2,5 Mol gelöstem $SiO_2$ je Mol $K_2O$ bzw. $Na_2O$ sowie ggf. feinteiligen Füllstoffen, worin die Kanäle des Formkörpers durch Einstellen oder Einhängen von Aluminiumdrähten bzw. -stäben noch flüssige Formmasse und Reaktion des Aluminiums mit den Alkalien der Alkalisilikatlösung eine Ablagerung Aluminiumoxidhydrat gebildet haben, wonach die Ablagerung durch Erhitzen auf Temperaturen bis zu 850° C in $\gamma$-Aluminiumoxid an der Oberfläche der Hohlkanäle umgewandelt wurde.

2. Verfahren zur Herstellung von Abgaskatalysator-Trägern aus anorganischen Formmassen mit enthaltenen Hohlkanälen mit einer Ablagerung von $\gamma$-

Aluminiumoxid an deren Oberfläche, **dadurch gekennzeichnet,** daß eine anorganische Formmasse aus

a) einem Oxid-Gemisch mit Gehalten von amorphem $SiO_2$ und Aluminiumoxid und/oder

b) Elektrofilterasche aus Hochtemperatur-Steinkohle-Kraftwerken und/oder

c) kalziniertem gemahlenem Bauxit und/oder Metakaolin in Mengen von 0,5 bis 4,0 Gew.-Teilen der feinteiligen Komponenten a) bis c) je Gew.-Teil einer Alkalisilikatlösung mit Gehalten von 1,2 bis 2,5 Mol gelöstem $SiO_2$ je Mol $K_2O$ bzw. $Na_2O$ sowie ggf. feinteiligen Füllstoffen in fließfähiger Form in eine Form gegossen, gepreßt bzw. extrudiert wird, wobei die Form eine Vielzahl von parallel angeordneten Aluminiumdrähten bzw. -stäben enthält und die Formmasse bei Temperaturen von 60 bis 120° C gehärtet wird, wobei durch Reaktion der Alkalien der Alkalisilikatlösung anstelle der Aluminiumdrähte bzw. -stäbe Hohlkanäle mit einer Auskleidung aus Aluminiumoxidhydrat entstehen, worauf durch Erhitzer auf 600 bis 850° C das Aluminiumoxidhydrat an der Oberfläche der Hohlkanäle in γ-Aluminiumoxid umgewandelt wird.

3. Verfahren nach Anspruch 2, dadurch gekennzeichnet, daß die wässrige Alkalisilikatlösung ganz oder teilweise durch Auflösen von amorpher dispers-pulverförmiger, wasserhaltiger Kieselsäure in Alkalihydroxiden oder deren wässrigen Lösungen hergestellt wird.

4. Verfahren nach Anspruch 2, dadurch gekennzeichnet, daß die Aluminiumdrähte bzw. -stäbe in der Form durch Ausbildung eines Teils der Formwandung als Lochscheibe o. dgl. gehalten sind.

5. Verfahren nach Anspruch 2, dadurch gekennzeichnet, daß die Elektrode einer elektrischen Gleichspannung auf die Aluminiumdrähte bzw. -stäbe während der Härtung einwirkt.

Fig.1

Fig. 2

Dynamit Nobel Aktiengesellschaft, Troisdorf